# EUROPEAN PATENT SPECIFICATION

(11) **EP 4 051 538 B1**
(45) Date of publication and mention of the grant of the patent: **09.07.2025**
(21) Application number: 20829706.9
(22) Date of filing: 11.11.2020
(51) Int. Cl.: B60Q 1/32, B60Q 1/26, B60Q 1/00, B60Q 3/217, B60R 13/04

(54) **ILLUMINATED DECORATIVE EXTERIOR TRIM FOR VEHICLES**
BELEUCHTETE AUSSEN-ZIERLEISTE FÜR FAHRZEUGE
GARNITURE EXTÉRIEURE DÉCORATIVE ÉCLAIRÉE POUR VÉHICULES

(43) Date of publication of application: 07.09.2022
(73) Proprietor: Inan, Ilker, Sancaktepe/Istanbul (TR)
(72) Inventor: ÇERÇIL, Aydin, Tuzla/ stanbul (TR); BALCI, Hüseyin, Tepeba /Eskisehir (TR); ÇALIK, Betül, Merkez Bilecik (TR); TANER, Kaan, Yar mca Körfez/Kocaeli (TR); BIYIK, Murat, Merkez Bilecik (TR)
(74) Representative: Kaya, Erdem
(86) International application number: PCT/TR2020/051084
(87) International publication number: WO 2022/093143

(56) References cited:
- EP-A1- 3 121 362
- EP-A1- 3 141 797
- EP-A1- 3 693 221
- EP-B1- 3 121 362
- DE-A1- 10 322 187
- DE-A1- 102008 056 121
- DE-A1- 102009 017 363
- DE-A1- 102011 016 408
- DE-U1- 202016 104 986
- DE-U1- 202016 104 986

## Description

### TECHNICAL FIELD

The invention is related to a door molding that is used on vehicles, particularly along the exterior of the vehicle doors.

The invention is particularly related to a novelty carried out on door moldings that are used on automobiles and commercial vehicles, for decorative purposes on the doors of vehicles, generally produced from plastic, which can optionally be used with a decorative layer thereon.

### PRIOR ART

For many years moldings have been used on the side of the doors for decorative purposes. Said moldings technically do not only protect the door from scrapes but they also provide visual aesthetics to the user.

Similarly, the moldings used at the edges of the windows not only provide a technical function but they are supplied with nickel plating thereon in order to provide visual aesthetics. This can be used for door moldings in the same way.

Visual aesthetics have gained importance in the automotive industry with the development of technology and the reduction of the cost of decorative lighting also led to an increase in production.

The decorative studies carried out particularly in applications such as headlights, tail lights besides DRL lighting groups for vehicle lighting have gained importance in terms of user preferences particularly with the development of LED technology.

For example in DRL applications, besides independent lighting units, light guide applications are commonly used that allows the light to be continuously seen properly. However, applications that provide decorative aesthetics or that ensure that the vehicle is seen particularly from the side are limited in the prior art.

In the EPO patent document with the publication number EP611040A1 discloses a lighting module that is used on the door tread plate. Within the scope of said module, the application is carried out by adhering the LED strip onto the exterior of the door. Within this scope, it does not have a decorative or technical function by being positioned inside a casing, contrary to the scope of the present invention.

In the USPTO patent document with the publication numbered US7364315B2, a lighting element that is placed inside a tube that increases the emanation of light suitable to be used as an exterior trim in vehicles is disclosed. Said application is completely different from the application of the present invention; therefore it does not provide the same aesthetic effect.

In the DMPA patent document with the publication numbered DE19707543A1 describes lighting groups that have been particularly positioned on the door molding that is located on the door in vehicles. The mentioned lighting groups have been developed to aid the driver by illuminating the front section of the door similar to applications that have been carried out on door handles and mirrors in the prior art. Indeed, said applications work in situations when the vehicle is not on the move within the scope of the US and EU regulations and they are not suitable to be used as constant lighting. Moreover, said embodiment provides localized illumination through reflection.

DE102009017363A1 relates an interior trim element which has at least 3 component. DE10322187A1 is related a protective and light illuminated vehicle door strip. The invention is made for protect door and that is not consist of any mold elements. DE202016104986U1 relates a illuminated footboard which is located outside of the vehicle. The invention has no decorative illuminative effect that is controlled by opaque element. EP3141797A1 relates a light guide LED strips which can be adapt vehicle trip parts. DE102011016408A1 relates a vehicle door molding that has illumination effect. The molding body has nanoparticles which that is act like light guide.

The German application with DE10322187A1 number relates to a protective strip with a luminous effect designed for the door sill of a motor vehicle. The protective strip consists of a lower support structure made of opaque material and an upper cover structure made of transparent material, with at least one lighting element, such as an electroluminescent film or LED system, positioned between them. The upper cover structure features an opaque mask with translucent windows that allow light to pass through in specific patterns or shapes. The support and cover structures are securely bonded together in a liquid- and gas-tight manner to protect the lighting elements. The strip is attached to the vehicle's door sill using fastening elements, with a thickened edge and arc-shaped lip providing support. The design also allows for the protective strip to be used in other applications requiring illumination, such as on stairs in public venues.

In the prior art, decorative lighting studies can be carried out for vehicles in OEM or after-market products. However, in known applications, the most important problem is that the light cannot be applied to provide the desired visual aesthetics and controlled effect. Moreover known applications that are related to reflection/blocking of light in a controlled manner are not available.

As a result all of the problems mentioned above, have made it necessary to provide a novelty in the related field.

### OBJECT OF THE INVENTION

The present invention aims to eliminate the problems mentioned above and to provide a technical novelty to the related field.

The main object of the invention is to provide an exterior trim structure for vehicles that allows visual aesthetics or warning lights in accordance with light conductance by illuminating the door moldings that are located on the doors of vehicles as exterior trim aspects from the inner section.

Another object of the invention is to provide an aesthetic lighting element that enables the light to be intensified at only the desired areas and prevents it from being from the undesired areas.

Another object of the invention is to provide an alternative image by using different shapes or fonts for door moldings that are located on the doors of vehicles.

Another aim of the invention is to allow technical functions belonging to the vehicle to be defined by using a lighting group that is located on the door moldings of vehicles.

### BRIEF DESCRIPTION OF THE INVENTION

The present invention is defined by the features of claim 1.

In another preferred embodiment of the invention, the invention comprises a decorative shape on the surface of the light blocking layer that allows regional translucent of the body and/or the outer cover by eliminating the opacity feature of the light blocking layer regionally.

According to another preferred embodiment, the invention has a lighting unit that is fixed on at least a carrier, where said unit is formed of an array of LED's.

According to another preferred embodiment, the invention comprises at least a retaining apparatus that enables the lighting unit to be fixed at a determined position inside the body and that does not prevent the transmission of light during said fixing process.

According to another preferred embodiment, the invention comprises a lighting unit slot that forms the mounting area for the alignment of LED's, to enable the lighting unit to be fixed.

According to another preferred embodiment, the invention comprises a retaining apparatus having an upper-body that is positioned parallel to the lower body that enables the limit the reverse movement of the lighting unit by creating the lighting unit slot between said lower body and itself.

According to another preferred embodiment, the invention comprises at least a retaining apparatus having an opening, located in the lower section of the lighting unit slot that enables the fixing of at least one LED by disposing of said LED inside the lighting unit.

According to another preferred embodiment, the invention comprises a retaining apparatus (30) located parallel to the lower body, having an upper body and a lower body, wherein a lighting unit slot is formed there-between and whereby the movement of the lighting unit in the reverse direction is prevented.

According to another preferred embodiment, the invention comprises a retaining apparatus having an upper body, which is positioned parallel to the lower body, which enables to limit the reverse movement of the lighting unit by creating the lighting unit slot between said lower body and itself.

According to another preferred embodiment, the invention comprises at least one connection element that is located on the fixing body of the retaining apparatus that enables the retaining apparatus to be fixed on the body.

According to another preferred embodiment, the invention comprises a connection element that is an adhesive material.

According to another preferred embodiment, the invention comprises a connection element that can be attached and detached.

According to another preferred embodiment, the invention comprises a body having a thickness that allows at least 5% transmission of light, made of thermoplastic material.

According to another preferred embodiment, the invention comprises an outer cover that can be fixed on the body having a thickness that allows at least 5% transmission of light, made of thermoplastic material.

According to another preferred embodiment, the invention comprises at least one decorative shape that is formed on the surface of the body by removing the light-blocking layer that is located on the body, from the surface via a laser.

According to another preferred embodiment, the invention comprises at least one decorative shape that is formed on the surface of the outer cover by removing the light-blocking layer that is located on the outer cover, from the surface via a laser.

According to another preferred embodiment, the invention comprises at least one decorative shape that is formed on the surface of the outer cover or the body by masking during the formation of the light-blocking layer that is located on the outer cover or the body.

According to another preferred embodiment, the invention comprises at least one cover fixing opening on said body, to enable the outer cover to be fixed on the body.

According to another preferred embodiment, the invention comprises at least one fixing notch on the outer cover that allows the outer cover to be fixed on the body that is suitable for said outer cover to be fitted into the cover fixing opening located inside the body.

According to another preferred embodiment, the invention comprises a plurality of lighting elements that can turn on or off independent from each other at a pre-defined configuration.

According to another preferred embodiment, the invention comprises a plurality of lighting units in the body that can be controlled independently.

According to another preferred embodiment, the invention comprises a body and outer cover that is diffusive and non-opaque.

According to another preferred embodiment of the invention, a light guide that is designed in different shapes on the body at different sections is used. Said light guide reflects the light received from the lighting element.

The protection scope of the invention is defined by the appended claims and the invention cannot be limited to the embodiments described in this brief and detailed description.

### BRIEF DESCRIPTION OF THE FIGURES

Figure 1, is the front view of the vehicle door on which the invention is applied.
Figure 2, is the front view of the invention.
Figure 3, is the rear view of the invention.
Figure 4, is the detailed rear view of the invention.
Figure 5A is the cross-sectional view of the invention.
Figure 5B is the cross-sectional view of the alternative embodiment of the invention having a different decorative image.
Figure 5C is the front view of the alternative embodiment of the invention having a different decorative image.
Figure 6 is the perspective view of the retaining apparatus of the invention.
Figure 7 is the perspective view showing the usage of the retaining apparatus of the invention.

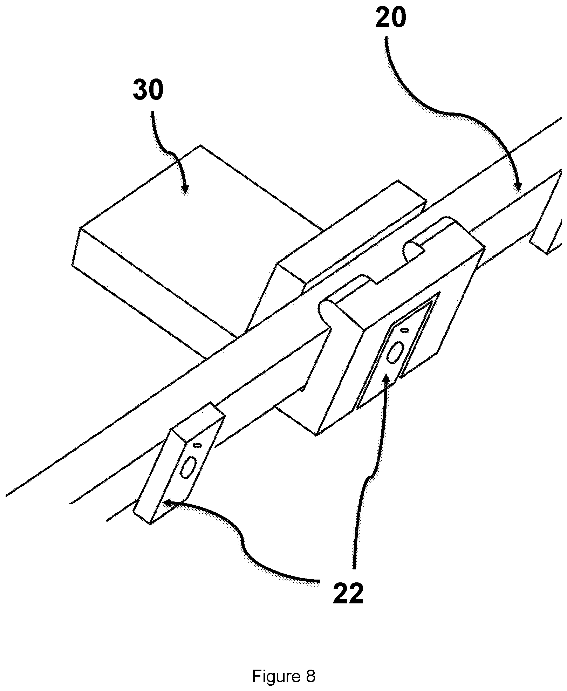

Figure 8 is the perspective view showing the usage of the retaining apparatus of the invention.

### DESCRIPTION OF THE REFERENCE NUMBERS ILLUSTRATED IN THE DRAWINGS:

10. Body
11. Outer cover
20. Lighting unit
21. Power transmission element
22. Lighting element
30. Retaining apparatus
   31. Lower body
      310. Protrusion
      311. Opening
   32. Upper body
   33. Fixing body
   34. Lighting unit slot
40. Light blocking apparatus
50. Connection element
60. Light-blocking Layer
   61. Decorative shape
D. Door
DP. Door plate
M. Molding

### DETAILED DESCRIPTION OF THE INVENTION

In this detailed description, the decorative exterior trim for vehicles subject to the invention has been illustrated with non-limiting examples to further describe the subject matter of the invention.

The subject matter of the invention is particularly related to a novelty carried out on door (D) moldings (M) that are used in automobiles and commercial vehicles, used for decorative purposes on the door (D), generally produced from plastic, and that can optionally be used with a decorative layer thereon.

The invention is defined by the features of claim 1.

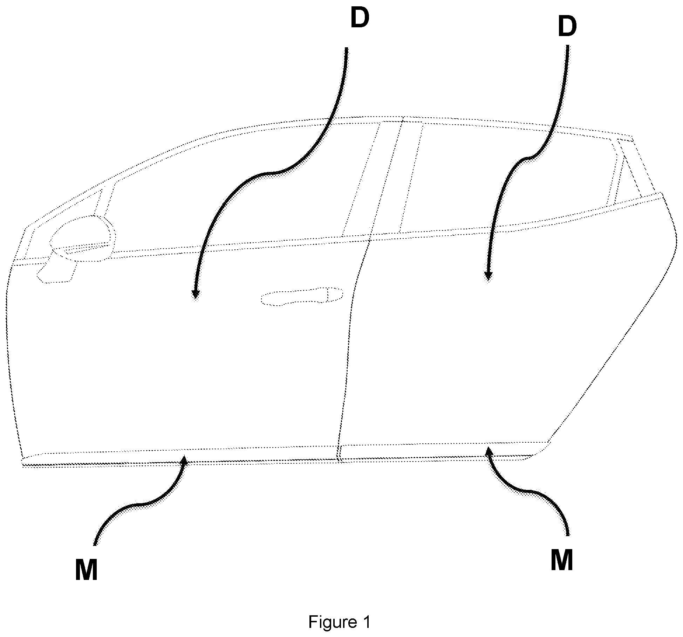

In Figure 1, the position of the door (D) molding (M) on the vehicle door (D), which is an exterior trim element subject of the invention, has been illustrated. Said door (D) molding (M) can, not only be provided at the lowermost section of the door (D), but it can also be used such as to be fixed in any position on the door plate (DP). The mounting can be produced to have different designs for front and rear doors (D) but usually the symmetrical design is used for the right and left doors (D).

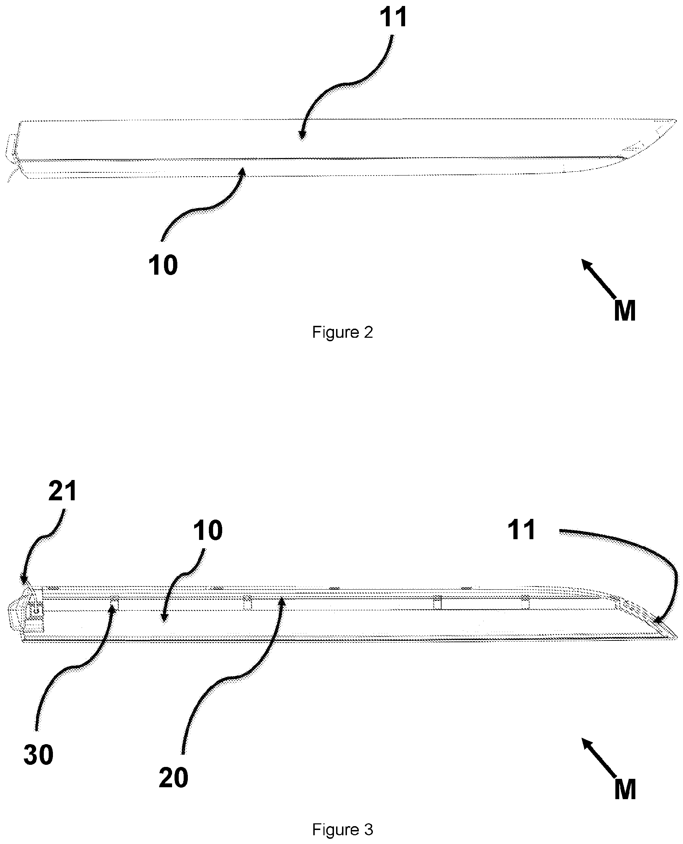

The front view of an embodiment of said door (D) mounting (M) has been provided in Figure 2. Said molding (M) comprises preferably at least a body (10) consisting of one piece, at the exterior section, and an outer cover (11) on the body (10) that is fixed to cover the top section of particularly the body (10) partially or entirely. The mentioned outer cover (11) design is used optionally, and it is preferably used in order to increase visual aesthetics and/or to create a lighted visual effect.

According to a preferred embodiment of the invention, said outer cover (11) is fixed onto the body (10) through at least one opening located on said body (10), preferably by being placed on the cover fixing opening formed by preferably a channel, via fixing notches that are located on said outer cover (11), that is suitable to the form of the cover fixing opening. In an alternative embodiment of the invention, the outer cover (11) can be adhered onto the body (10).

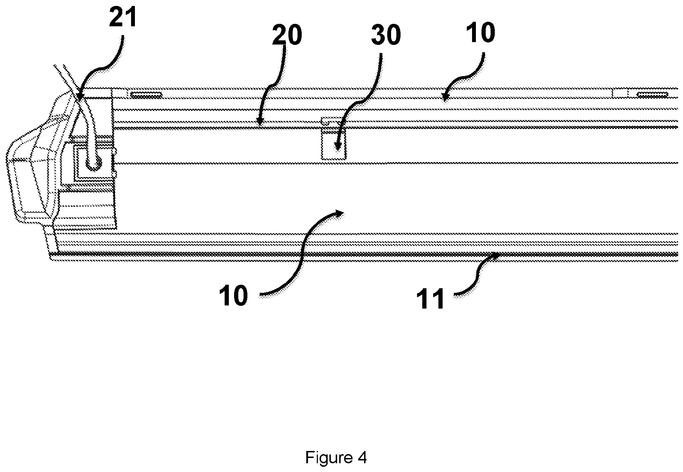

The inner section of the molding (M) subject of the invention, that is in contact with the door plate (DP) of the vehicle has been given in Figure 3, and the detailed view of said structure is illustrated in Figure 4. As it can be seen in the figures, the invention comprises, a clip configuration at the inner section of the body (10) that can be preferably attached or detached, and that allows the molding to be fixed to the door plate (DP) of the vehicle. Said clips must have a frequency and number such that they can provide the strength to retain the molding (M) on the door (D) during and after the mounting process. The mounting of the molding (M) to the door plate (DP) is carried out via at least a fixing pin of the molding (M). In alternative embodiments of the invention, the molding can also be adhered onto the body without using clips.

Within the scope of the invention, the transmission of power to the lighting unit (20) that provides illumination of the molding (M) is carried out via a power transmission element (21). In a preferred embodiment, said power transmission element (21) is delivered to the necessary control unit, through the door plate (DP).

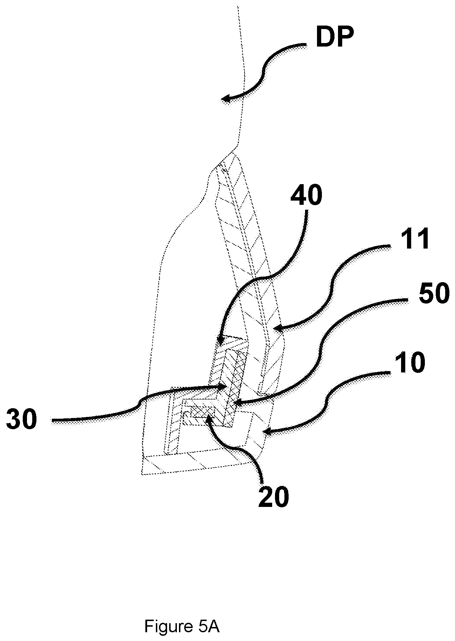

In Figure 5A the cross-sectional view of a preferred embodiment of the invention has been given. Within the scope of the embodiment, the body (10) of the invention comprises a lighting unit (20) at the lower section of the body (10) that is fixed via a retaining apparatus (30) from the inner section to the inner surface located preferably at the reverse direction of the door plate (DP). Said lighting unit (20) comprises at least one lighting element (22) that is preferably positioned at a vertical axis alt such as to radiate light towards the lower section. The lighting unit (20) comprises a light-blocking apparatus (40) that is formed from at least one piece, that enables to block light at the top section and the section that remains at the door plate (DP) direction, that preferably extends along the body (10) at a length as much as the radiation area created by at least the lighting unit (20). The radiance area created by the lighting unit (20) is limited by means of the light-blocking apparatus (40) and thereby the filtering of light from the edges of the body (10) is prevented.

In a preferred embodiment of the invention, said body (10) and/or outer cover (11) comprises at least one surface that is not opaque and that has diffusive properties. By means of the diffusive properties of said body (10) and said outer cover (11), translucent is provided and a homogenous image is obtained, and point distinctivity cannot be observed in the areas where lighting elements (22) that are light sources are located.

In a preferred embodiment of the invention, the position of the lighting unit (20) in the body (10) is carried out at a distance such as to provide homogenous distinctiveness at the outer surface of the body (10), according to the diffusive property of the body (10), and accordingly, the frequency of the lighting element (22) located on the lighting unit (20) can be determined.

In a preferred embodiment of the invention, the lighting elements (22) of the lighting unit (20) can radiate light at least a 90, preferably a 120° angle. The lighting elements (22) preferably are LED (Light-emitting diode) and they can be components that are independent of each other, or the lighting unit (20) can be provided with LED groups that are aligned at a certain order on a strip PCB (flexible or non-flexible).

In a preferred embodiment of the invention, the retaining apparatus (30) that enables the lighting unit (20) to be fixed at a desired position on the body (10), is fixed onto the body (10) via a connection element (50). The connection element (50) can be an element such as a clip/pin that is positioned onto the fixing body (32) of the retaining apparatus (30), or it can be a high strength double-sided strip that is resilient against humidity/liquids/heat/cold.

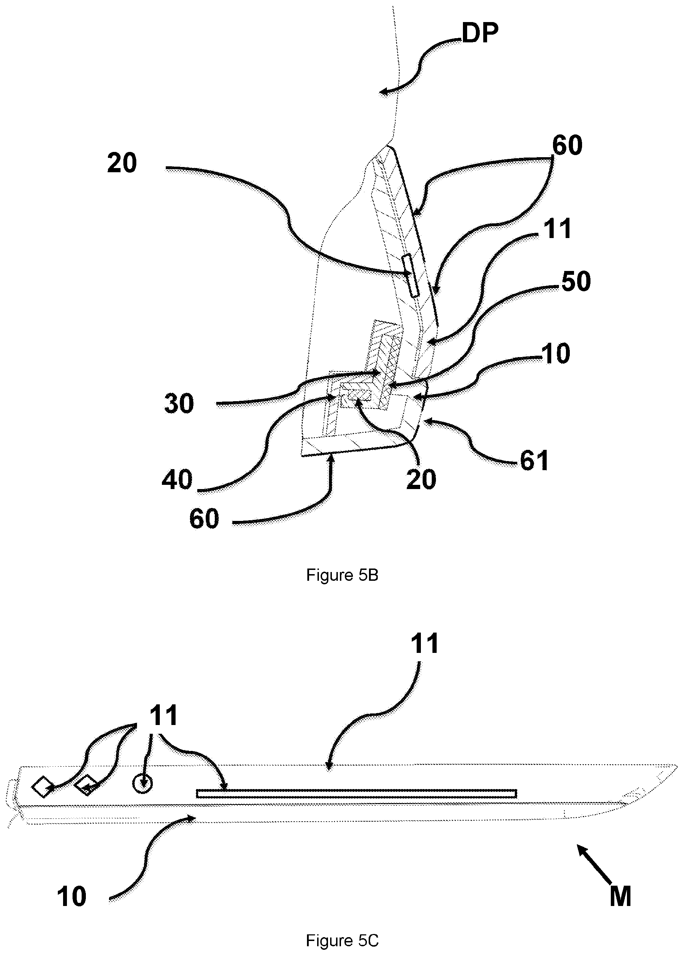

Figure 5B is the cross-sectional view of the alternative embodiment of the invention. Within the scope of the mentioned embodiment, illumination is provided at the outer section of the body (10) at a determined intensity, within the scope of the illumination area that has been limited via the light-blocking apparatus (40) that is located inside the body (10). As it can be seen in the Figure, by means of the light-blocking layers (60) that have been provided on the body (10), the illumination area can also be limited from its outer section. By this means, a light-blocking layer (60) is not provided at the decorative shape (61) areas located at the determined sections of the light-blocking layer (60) and a visual effect is created through the light that is passed over the body (10). In Figure 5C, the drawing that represents the decorative shapes (61) that are located on said light-blocking layer (60) and that comprise said light-blocking layer (60) is provided. The decorative shapes (61) can not only be in the form of strips or an elliptical line, but they can also be geometric shapes. In a preferred embodiment of the invention said decorative shape (61) is the brand logo.

In an alternative embodiment provided in Figure 5B, the lighting application carried out over the outer cover (11) of the invention is illustrated. In a preferred embodiment of the invention, at least one lighting unit (20) is provided on the upper section of the body (10). Said lighting unit (20) can provide light radiance to the outer section of the body (10) from the determined area. Within the mentioned scope, a light-blocking layer (60) can be provided on the outer surface of the body (10) or an outer cover (11) that has a light-blocking layer (60) comprising a decorative shape (61) thereon can be mounted to said area. An alternative light-blocking apparatus (40) can be used at the rear section of the lighting unit (20) within the scope of said embodiment, or the area where the lighting unit (20) is fixed onto the body (10) can be covered with a light-blocking layer (60).

In a preferred embodiment of the invention, the above-mentioned light-blocking layer (60) can be a material that has low translucent or can be an opaque chemical material. In a preferred alternative embodiment, said light-blocking layer (60) can be nickel plating. By this means, visual aesthetics are increased by means of the decorative shapes (61) on the nickel plating.

In a preferred embodiment of the invention, the light-blocking layer (60) that limits the transmission of light from the outer section of the body (10), can be provided with the application of the coating material by means of masking on the surface, to create a decorative shape (61) on the light-blocking layer (60). In an alternative embodiment, said decorative shape (61) can be created by carrying out material removal methods from the surface such as laser or engraving conducted on the coating material that has been applied.

In an alternative embodiment of the invention, a sticker application can be carried out having a light-blocking layer (60) comprising a decorative shape (61). Within this scope, nickel-plated stickers can be used.

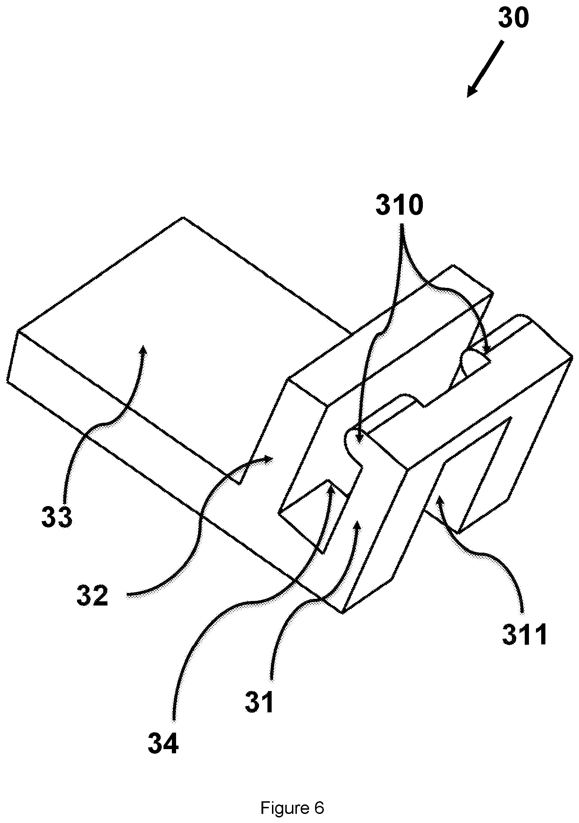

The perspective view of the retaining apparatus (30) of the invention has been illustrated in Figure 6. A lighting element (22) located inside the lighting unit (20) can be placed on the opening (311) located on the lower body (31) of the retaining apparatus (30). By this means, while the lighting element (22) can be placed precisely on the surface, said lower body (31) does not prevent the radiation of light. The lighting element (22) can be aligned with the bottom surface of the lower body (31) or it can be located further behind.

In another preferred embodiment of the invention said lighting element (22) has been positioned further ahead from the bottom surface of the lower body (31).

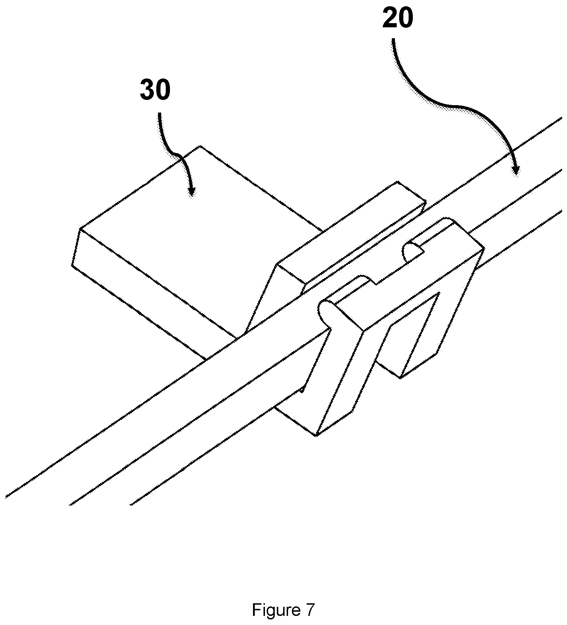

In Figure 7, the illustrative drawing shows the lighting unit (20), and the lighting elements (22) contained within the lighting unit (20), and the position of said lighting elements on the retaining apparatus (30).

The retaining apparatus (30) of the invention, is formed of at least three sections, said sections being the lower body (31), the upper body (32), and the fixing body (33); and the lower body (31) and the upper body (32) are preferably positioned parallel to each other. The lower body (31) and the upper body (32) are coupled onto the fixing body (33) as being parallel with each other and the fixing of the retaining apparatus (30) onto the body (10), is carried out over said fixing body (33).

The lower body (31) of the retaining apparatus (40) preferably has two protrusions (310) at the top section of said lower body and preferably at least in the middle section aligned with the opening (311) and spaced to have the same width as said opening. Thereby the lighting unit slot (34) formed from the space between the lower body (31) and the upper body (32) allows the lighting unit (20) to be easily mounted and ensures that it does not easily come out of said slot.

In a preferred embodiment of the invention the molding (M) can also be applied as window moldings apart the door (D) of the vehicle, or as decorative applications on the bumper, as boot moldings or on the rear door (D).

In another preferred embodiment of the invention, at least one of the plurality of lighting elements (22) contained by the lighting unit (20) can be independently controlled during application. Within the scope of said control, the lighting element (22) can be operated as an on/off dimmer. Said control can be carried out via at least one controller. Within this scope, the lighting provided on the moldings (M) located on the vehicle can be carried out with different functions.

For example, the decorative shapes (61) located on figure 5C can not only be illuminated independently from each other but pulsating light applications can also be provided. By means of the controller used within the scope of the invention, signalization is provided and dynamic lighting can be carried out on the lighting elements (22) and the lighting unit (20) contained within the molding (M).

In another preferred embodiment of the invention, the hazard light and the signal lamp applications can be carried out via the lighting unit (20) contained within the molding (M).

In a preferred embodiment of the invention, the lighting unit (20) contained within the molding (M) located on the tailgate (D) (5th door) is triggered by means of brake lamps and thereby a warning function can be provided.

In another preferred embodiment of the invention, a light guide that is fed by at least one lighting element (22) can be used as the lighting unit.

In a preferred embodiment of the invention, the lighting element (22) is a display that is formed of at least one piece. In said application, each segment of the display within the pre-determined configuration can turn on or off independently from each other and they can be controlled by means of signalization. Within this scope, each lighting element (22) contains a unit formed of a plurality of segments. In an alternative embodiment, said lighting element (22) can be a light-radiating panel.

## Claims

1. A Molding suitable for functional or decorative purposes on vehicles, suitable to be used on/for the outside surface on vehicle doors (D), having a translucent body (10) consisting of at least one piece, comprising at least a lighting unit (20) in said body (10), the body being suitable to be positioned on to the exterior of a door plate (DP) such as to radiate light in one direction, at least an outer cover (11) that is formed at the front section of the body (10) that allows a homogeneous distribution of light, and a light-blocking layer (60) on at least the outer surface of the outer cover, that provides regional opacity by limiting the radiance of light that is initially radiated from said lighting unit (20), from being radiated from the surface of the body (10), **characterized in that**, the lighting unit (20) comprises a light-blocking apparatus (40) that is formed of at least one piece and is located on inner side of the body (10) between the door plate (DP) and the lighting unit (20), and that enables to block light at a top section direction and in door plate (DP) direction, such that the radiation area created by the lighting unit (20) is limited by means of the light-blocking apparatus (40) thereby preventing light from being radiated in afore-mentioned two directions.

2. A molding (M) according to claim 1, comprising a decorative shape (61) on the surface of the light-blocking layer (60) that allows regional translucency of the body (10) and/or the outer (11) cover by eliminating the opacity feature of the light-blocking layer (60) regionally.

3. A molding (M) according to claim 1 having a lighting unit (20) that is fixed on at least a carrier, where said lighting unit (20) is formed of an array of lighting elements (22).

4. A molding (M) according to claim 1 having a lighting unit (20) that is a light guide.

5. A molding (M) according to claim 1, comprising at least a retaining apparatus (30) that enables the lighting unit (20) to be fixed inside the body (10), in a way that it would not block the light transmission.

6. A molding (M) according to claim 5, comprising at least a retaining apparatus (30) that has at least a lighting unit slot (34) in order to ensure that the lighting unit (20) is fixed.

7. A molding (M) according to claim 1, comprising a body (10) having a thickness that allows at least 5% transmission of light, made of thermoplastic material.

8. A molding (M) according to claim 1, comprising an outer cover that (11) can be fixed on the body (10) having a thickness that allows at least 5% transmission of light, made of thermoplastic material.

9. A molding (M) according to claim 2, comprising at least one decorative shape (61) that is formed on the surface of the outer cover (11) or the body (10) by removing part of the light-blocking layer (60) that is located on the outer surface of the outer cover (11) or the body (10).

10. A molding (M) according to claim 2, comprising at least one decorative shape (61) that is located on the outer surface of the outer (11) or the body (10) which is formed on the surface of the outer cover (11) or the body (10) by masking during the coating of the light-blocking layer (60).

11. A molding (M) according to claim 1, having a lighting unit (20) comprising a plurality of lighting elements (22) that can be controlled by signalization and that can turn on or off independent from each other at a pre-defined configuration.

12. A molding (M) according to claim 1, comprising a plurality of lighting units (20) in the body (10), that can be controlled independently.

## Patentansprüche

1. Formteil, das für funktionelle oder dekorative Zwecke an Fahrzeugen geeignet ist, das auf/für die Außenfläche von Fahrzeugtüren (D) verwendet werden kann, mit einem durchscheinenden Körper (10), der aus mindestens einem Stück besteht, das mindestens eine Beleuchtungseinheit (20) in dem Körper (10) umfasst, wobei der Körper geeignet ist, auf der Außenseite eines Türblechs (DP) so positioniert zu werden, dass er Licht in eine Richtung abstrahlt, mindestens eine äußere Abdeckung (11), die an dem vorderen Abschnitt des Körpers (10) ausgebildet ist, der eine homogene Verteilung von Licht ermöglicht, und eine lichtblockierende Schicht (60) auf mindestens der äußeren Oberfläche der äußeren Abdeckung, die für eine regionale Opazität sorgt, indem sie die Ausstrahlung von Licht, das anfänglich von der Beleuchtungseinheit (20) abgestrahlt wird, daran hindert, von der Oberfläche des Körpers (10) abgestrahlt zu werden, **dadurch gekennzeichnet, dass** die Beleuchtungseinheit (20) eine lichtblockierende Vorrichtung (40) umfasst, die aus mindestens einem Stück gebildet ist und an der Innenseite des Körpers (10) zwischen der Türplatte (DP) und der Beleuchtungseinheit (20) angeordnet ist, und die es ermöglicht, Licht in einer Richtung des oberen Abschnitts und in Richtung des Türblechs (DP) zu blockieren, so dass der von der Beleuchtungseinheit (20) erzeugte Strahlungsbereich durch die lichtblockierende Vorrichtung (40) begrenzt wird, wodurch verhindert wird, dass Licht in die beiden vorgenannten Richtungen ausgestrahlt wird.

2. Formteil (M) nach Anspruch 1, umfassend eine dekorative Form (61) auf der Oberfläche der lichtblockierenden Schicht (60), die eine regionale Transluzenz des Körpers (10) und/oder der äußeren (11) Abdeckung ermöglicht, indem die Opazitätseigenschaft der lichtblockierenden Schicht (60) regional aufgehoben wird.

3. Formteil (M) nach Anspruch 1, mit einer Beleuchtungseinheit (20), die an mindestens einem Träger befestigt ist, wobei die Beleuchtungseinheit (20) aus einer Anordnung von Beleuchtungselementen (22) gebildet ist.

4. Formteil (M) nach Anspruch 1, mit einer Beleuchtungseinheit (20), die ein Lichtleiter ist.

5. Formteil (M) nach Anspruch 1, umfassend mindestens eine Haltevorrichtung (30), die es ermöglicht, die Beleuchtungseinheit (20) im Inneren des Körpers (10) so zu befestigen, dass sie die Lichtdurchlässigkeit nicht blockiert.

6. Formteil (M) nach Anspruch 5, umfassend mindestens eine Haltevorrichtung (30), die mindestens einen Beleuchtungseinheitsschlitz (34) aufweist, um die Befestigung der Beleuchtungseinheit (20) zu gewährleisten.

7. Formteil (M) nach Anspruch 1, umfassend einen Körper (10) mit einer Dicke, die mindestens 5 % Lichtdurchlässigkeit ermöglicht, aus thermoplastischem Material.

8. Formteil (M) nach Anspruch 1, umfassend eine äußere Abdeckung (11), die auf dem Körper (10) befestigt werden kann und eine Dicke aufweist, die mindestens 5 % Lichtdurchlässigkeit erlaubt, und aus thermoplastischem Material besteht.

9. Formteil (M) nach Anspruch 2, umfassend mindestens eine dekorative Form (61), die auf der Oberfläche der äußeren Abdeckung (11) oder des Körpers (10) durch Entfernen eines Teils der lichtblockierenden Schicht (60), die sich auf der äußeren Oberfläche der äußeren Abdeckung (11) oder des Körpers (10) befindet, gebildet wird.

10. Formteil (M) nach Anspruch 2, umfassend mindestens eine dekorative Form (61), die sich auf der äußeren Oberfläche der äußeren Abdeckung (11) oder des Körpers (10) befindet, die auf der Oberfläche der äußeren Abdeckung (11) oder des Körpers (10) durch Maskierung während der Beschichtung der lichtblockierenden Schicht (60) gebildet wird.

11. Formteil (M) nach Anspruch 1, mit einer Beleuchtungseinheit (20), die eine Vielzahl von Beleuchtungselementen (22) umfasst, die durch Signalisierung gesteuert werden können und die unabhängig voneinander in einer vordefinierten Konfiguration ein- oder ausgeschaltet werden können.

12. Formteil (M) nach Anspruch 1, mit einer Vielzahl von Beleuchtungseinheiten (20) im Körper (10), die unabhängig voneinander gesteuert werden können.

## Revendications

1. Un moulage approprié à des fins fonctionnelles ou décoratives sur des véhicules, approprié pour être utilisé sur/pour la surface extérieure des portes de véhicules (D), ayant un corps translucide (10) consistant en au moins une pièce, comprenant au moins une unité d'éclairage (20) dans ledit corps (10), le corps étant approprié pour être positionné sur l'extérieur d'une plaque de porte (DP) de manière à rayonner de la lumière dans une direction, au moins un couvercle externe (11) formé sur la section avant du corps (10) qui permet une distribution homogène de la lumière, et une couche de blocage de la lumière (60) sur au moins la surface externe du couvercle externe, qui fournit une opacité régionale en limitant la radiance de la lumière qui est initialement rayonnée à partir de ladite unité d'éclairage (20), d'être rayonnée à partir de la surface du corps (10), **caractérisé en ce que** l'unité d'éclairage (20) comprend un dispositif de blocage de la lumière (40) formé d'au moins une pièce et situé sur le côté intérieur du corps (10) entre la plaque de porte (DP) et l'unité d'éclairage (20), et qui permet de bloquer la lumière dans la direction de la section supérieure et dans la direction de la plaque de porte (DP), de sorte que la zone de rayonnement créée par l'unité d'éclairage (20) est limitée au moyen du dispositif de blocage de la lumière (40), empêchant ainsi la lumière d'être rayonnée dans les deux directions susmentionnées.

2. Un moulage (M) selon la revendication 1, comprenant une forme décorative (61) sur la surface de la couche de blocage de la lumière (60) qui permet une translucidité régionale du corps (10) et/ou de la couvercle externe (11) en éliminant la caractéristique d'opacité de la couche de blocage de la lumière (60) au niveau régional.

3. Un moulage (M) selon la revendication 1 comportant une unité d'éclairage (20) qui est fixée sur au moins un support, où ladite unité d'éclairage (20) est formée d'un ensemble d'éléments d'éclairage (22).

4. Un moulage (M) selon la revendication 1 ayant une unité d'éclairage (20) qui est un guide de lumière.

5. Un moulage (M) selon la revendication 1, comprenant au moins un dispositif de retenue (30) qui permet à l'unité d'éclairage (20) d'être fixée à l'intérieur du corps (10), de manière à ne pas bloquer la transmission de la lumière.

6. Un moulage (M) selon la revendication 5, comprenant au moins un appareil de retenue (30) qui a au moins une fente de l'unité d'éclairage (34) afin d'assurer que l'unité d'éclairage (20) est fixée.

7. Un moulage (M) selon la revendication 1, comprenant un corps (10) d'une épaisseur permettant une transmission de la lumière d'au moins 5 %, fabriqué en matière thermoplastique.

8. Un moulage (M) selon la revendication 1, comprenant un couvercle externe (11) pouvant être fixé sur le corps (10), d'une épaisseur permettant une transmission de la lumière d'au moins 5 %, fabriqué en matériau thermoplastique.

9. Un moulage (M) selon la revendication 2, comprenant au moins une forme décorative (61) qui est formée sur la surface du couvercle externe (11) ou du corps (10) en enlevant une partie de la couche de blocage de la lumière (60) qui est située sur la surface externe du couvercle externe (11) ou du corps (10).

10. Un moulage (M) selon la revendication 2, comprenant au moins une forme décorative (61) située sur la surface externe de la couvercle externe (11) ou du corps (10) qui est formée sur la surface de la couvercle externe (11) ou du corps (10) par masquage pendant le revêtement de la couche de blocage de la lumière (60).

11. Un moulage (M) selon la revendication 1, ayant une unité d'éclairage (20) comprenant une pluralité d'éléments d'éclairage (22) qui peuvent être commandés par signalisation et qui peuvent s'allumer ou s'éteindre indépendamment les uns des autres selon une configuration prédéfinie.

12. Un moulage (M) selon la revendication 1, comprenant une pluralité d'unités d'éclairage (20) dans le corps (10), qui peuvent être commandées indépendamment.
